# EUROPÄISCHE PATENTSCHRIFT

(11) **EP 2 403 882 B1**
(45) Veröffentlichungstag und Bekanntmachung des Hinweises auf die Patenterteilung: **21.06.2017**
(21) Anmeldenummer: 10706619.3
(22) Anmeldetag: 02.03.2010
(51) Int. Cl.: C08B 3/02, C08B 3/06, C08B 15/05, C08B 31/04, C08B 31/12

(54) **VERFAHREN ZUR HERSTELLUNG VON POLYSACCHARIDDERIVATEN**
METHOD FOR PRODUCING POLYSACCHARIDE DERIVATIVES
PROCÉDÉ DE PRÉPARATION DE DÉRIVÉS DE POLYSACCHARIDE

(30) Priorität: 06.03.2009 DE 102009012161
(43) Veröffentlichungstag der Anmeldung: 11.01.2012
(73) Patentinhaber: Fraunhofer-Gesellschaft zur Förderung der angewandten Forschung e.V., 80686 München (DE)
(72) Erfinder: LEHMANN, André, 14478 Potsdam (DE); VOLKERT, Bert, 14167 Berlin (DE)
(74) Vertreter: Lux, Berthold
(86) Internationale Anmeldenummer: PCT/EP2010/052587
(87) Internationale Veröffentlichungsnummer: WO 2010/100126

(56) Entgegenhaltungen:
- EP-A1- 2 623 575
- WO-A1-2007/147813
- WO-A1-2008/119770
- WO-A1-2011/037820
- DE-A1- 2 415 154
- JP-A- 2005 306 917
- JP-A- 2006 233 144
- US-A- 1 943 176
- Römpp, Ionische Flüssigkeiten
- S. ABELLÓ ET AL: "Supported choline hydroxide (ionic liquid) as heterogeneous catalyst for aldol condensation reactions", CHEMICAL COMMUNICATIONS, no. 9, 1 January 2004 (2004-01-01), page 1096, XP55056999, ISSN: 1359-7345, DOI: 10.1039/b401448k
- FAN MINGMING ET AL: "Biodiesel production by transesterification catalyzed by an efficient choline ionic liquid catalyst", APPLIED ENERGY, ELSEVIER SCIENCE PUBLISHERS, GB, vol. 108, 11 April 2013 (2013-04-11), pages 333-339, XP028544254, ISSN: 0306-2619, DOI: 10.1016/J.APENERGY.2013.03.063
- MACLENNAN AIMEE ET AL: "Aerobic oxidation of [alpha],[beta]-unsaturated alcohols using sequentially-grown AuPd nanoparticles in water and tetraalkylphosphonium ionic liquids", CATALYSIS TODAY, ELSEVIER, NL, vol. 207, 2 June 2012 (2012-06-02), pages 170-179, XP028586473, ISSN: 0920-5861, DOI: 10.1016/J.CATTOD.2012.04.053
- MEGHDADI SORAIA ET AL: "Synthesis, characterization and X-ray crystal structure of copper(I) complexes of the 2-(2-quinolyl)benzothiazole ligand. Electrochemical and antibacterial studies", POLYHEDRON, vol. 97, 22 May 2015 (2015-05-22), pages 234-239, XP029264373, ISSN: 0277-5387, DOI: 10.1016/J.POLY.2015.05.026
- MALLAKPOUR SHADPOUR ET AL: "Investigating the nanostructure and thermal properties of chiral poly(amide-imide)/Al2O3compatibilized with 3-aminopropyltriethoxysilane", MATERIALS RESEARCH BULLETIN, vol. 48, no. 10, 6 June 2013 (2013-06-06), pages 3865-3872, XP028692685, ISSN: 0025-5408, DOI: 10.1016/J.MATERRESBULL.2013.05.095
- FAN AO ET AL: "Phosphonium ionic liquids as highly thermal stable and efficient phase transfer catalysts for solid-liquid Halex reactions", CATALYSIS TODAY, vol. 198, no. 1, 1 May 2012 (2012-05-01), pages 300-304, XP028958491, ISSN: 0920-5861, DOI: 10.1016/J.CATTOD.2012.02.063

## Beschreibung

Die vorliegende Erfindung betrifft ein Verfahren zur Derivatisierung von Polysacchariden oder deren verwandten Strukturen unter Einsatz von ionischen Flüssigkeiten.

Polysaccharide als natürliche Polymere sowie chemisch und physikalisch modifizierte Polysaccharide gewinnen immer mehr an Bedeutung in verschiedensten Bereichen der Industrie.

Gerade bei chemischen Derivatisierungen von Cellulose werden häufig Lösungsmittelsysteme wie z. B. N,N-Dimethylacetamide-LiCl (siehe El Seoud, O.A. Marson, Macromolecular Chemistry and Physics, 2000, 882) oder Dimethylsulfoxid/TBAF (siehe T. Heinze, R. Dicke, A. Koschella, Macromolecular Chemistry and Physics, 2000, 201,627) für eine homogene Syntheseführung eingesetzt. Nachteil solch einer Reaktionsführung sind verschiedene Nebenreaktionen sowie eine schwierige Aufarbeitung durch die verwendeten Lösungsmittel. Des Weiteren ist die maximale Einsatzkonzentration des zu derivatisierenden Polymers sehr gering, nämlich unter 20 Gew.-%.

Ionische Flüssigkeiten (IL) wie z. B. 1-N-Butyl-3-methylimidazoliumchlorid (BmimCl) (siehe T. Heinze, S. Barthel, Green Chemistry, 2006, 8, 301), 1-N-Allyl-3-methylimidazoliumchlorid (AmimCl) (siehe Y. Cao, J. Wu, T. Meng. Carbohydrate Polymers, 2007, 69, 665) oder 1-N-Ethyl-3-methylimidazoliumchlorid (EmimCl) gewannen in den letzten Jahren als Lösungsmittel für Cellulose immer mehr an Bedeutung. Nur wenige Arbeiten (A. Biswas, R.L. Shogren, Carbohydrate Polymers 2006, 66 546 und D.G. Stevenson, A. Biswas, Carbohydrate Polymers, 2007, 67, 21) sowie Patente (WO 2007/147813 und WO 2005/023873) betrachten auch die Anwendung der ionischen Flüssigkeiten zur chemischen Umsetzung weiterer Polysaccharide wie z. B. Stärke. Durch die Verwendung von ionischen Flüssigkeiten als Reaktionsmedium können bereits genannte Nachteile der bisherigen Lösungsmittel umgangen werden. Trotzdem wird der Einsatz der ionischen Flüssigkeiten für Synthesen von Polysaccharidderivaten im größeren Maßstab durch Faktoren wie eine umweltgefährdende und toxische Einstufung verschiedenster ionischer Flüssigkeiten als auch vor allem durch den hohen Preis limitiert.

Für die Synthese von Polysaccharidestern wie z.B. Cellulose- bzw. Stärkeacetate sind in T. Mark, Mehltretter, Starch/Stärke, 1972, 3,73; T. Heinze Liebert, Cellulose, 2003, 10, 283; sowie in WO 98/07755 geeignete Wege aufgezeigt. In den meisten dieser Schriften werden entsprechende Säurechloride bzw. Säureanhydride unter Verwendung von sauren oder basischen Katalysatoren als Veresterungsreagenzien eingesetzt, siehe u.a. G. Reinisch, U. Radics, Die Angewandte Makromolekulare Chemie, 1999, 4070, 113. So auch für die industrielle Synthese von Celluloseacetat wie in A. Hummel, Macromolecular Symposia, 2004, 208, 61.

Zur Darstellung von Polysaccharidethern wie z.B. 2-Hydroxyalkylstärken oder bei der Silylierung von Cellulosen ist meistens eine vorhergehende Aktivierung des Polysaccharids notwendig. Im Falle von Stärke kann dies bereits durch Lösen im alkalischen wässrigen Medium geschehen, wobei anschließend das Veretherungsreagenz zugesetzt werden kann (siehe F. Bien, B. Wiege, StarchlStärke, 2001, 53, 301).

Die Aktivierung von Cellulose hingegen bedarf in der Regel größeren Aufwandes. Es ist für die Silylierung von Cellulose eine vorhergehende Aktivierung durch flüssigen Ammoniak notwendig (siehe W. Mormann, Cellulose, 2003, 10, 271). In dieses heterogene System wird dann das Silylierungsmittel eingebracht und die Cellulose silyliert. Der Schritt der Aktivierung von Cellulose zwecks Umsatz mittels Silylierungsmittel kann auch homogen durch Lösen der Cellulose in einer ionischen Flüssigkeit erfolgen und mit anschließender Umsetzung zu einem Silylcellulosederivat (siehe WO 2007/056044). Nachteil dieses Verfahrens ist die begrenzte Löslichkeit der Cellulose in der ionischen Flüssigkeit, wodurch sich bereits genannte Limitierungen ergeben.

Die Verwendung ionischer Flüssigkeiten als Katalysatoren ist vor allem in der anorganischen aber auch in der organischen Chemie bekannt (siehe P. Wasserscheid, T. Welton, Ionic liquids in synthesis, 2nd Edition, Volume 2, 2008 und H. Zhang, F. Xu, Green Chemistry, 2007, 9, 1208). In der Polysaccharid-Chemie lassen sich für Veresterungs, Veretherungs- als auch für Hydrolyse-Reaktionen Druckschriften finden, in denen das native Polymer in der ionischen Flüssigkeit gelöst wird und es somit durch die beschränkte Löslichkeit desselben in der ionischen Flüssigkeit zu einem hohen Massenanteil an ionischer Flüssigkeit kommt.

Aufgabe der vorliegenden Erfindung ist es daher, ein Verfahren zur Veresterung, Veretherung oder Silylierung von Polysacchariden oder dessen Derivaten bereitzustellen, das es ermöglicht, eine gezielte Derivatisierung bzw. eine vollständige Substituierung der Hydroxylgruppen unter Einsatz von geringen Mengen an flüssigen Reaktionsmedium zu ermöglichen. Des Weiteren ist es Aufgabe der vorliegenden Erfindung, eine einfache Aufarbeitung des substituierten Polysaccharids zu ermöglichen wobei das flüssigen Reaktionsmedium ohne großen Aufwand zurückgewonnen werden kann.

Die Erkenntnis der vorliegenden Erfindung liegt darin, die Substituierung von Polysacchariden oder deren Derivaten in einer heterogenen Reaktionsführung unter Einsatz von geringen Mengen an ionischer Flüssigkeit durchzuführen.

Daher richtet sich die vorliegende Erfindung auf ein Verfahren zur Veresterung, Veretherung oder Silylierung von Polysaccharid oder dessen Derivaten mittels eines Veresterungsreagenzes, Veretherungsreagenzes oder Silylierungreagenzes in Gegenwart einer ionischen Flüssigkeit, worin die Menge an ionischer Flüssigkeit 2 bis 25 Gew.-%, vorzugsweise 2 bis 24 Gew.-%, bezogen auf das Polysaccharid oder dessen Derivate beträgt, wobei unter ionischen Flüssigkeiten Salze verstanden werden, die bei Temperaturen unter 100°C flüssig sind.

Vorzugsweise wird in dem erfindungsgemäßen Verfahren auf einen Vorbehandlungsschritt zur Aktivierung, wie das zum Beispiel bei Cellulose durch Einsatz von einem alkalisch wässrigen Medium bekannt ist, verzichtet. Des Weiteren ist es erfindungsgemäß, dass das Verfahren heterogen durchgeführt wird.

Die vorliegende Erfindung kann auch wie folgt beschrieben werden:

Verfahren zur Veresterung, Veretherung oder Silylierung von Polysaccharid oder dessen Derivate mittels eines Veresterungsreagenzes, Veretherungsreagenzes oder Silylierungsreagenzes in Gegenwart einer ionischen Flüssigkeit, worin das Verfahren heterogen durchgeführt wird.

Erfindungsgemäß wird das im vorhergehenden Absatz definierte Verfahren so durchgeführt, dass die Menge an ionischer Flüssigkeit 2 bis 25 Gew.-% bezogen auf das Polysaccharid oder dessen Derivate beträgt. Des Weiteren ist es bevorzugt, dass in dem erfindungsgemäßen Verfahren auf einen Vorbehandlungsschritt zur Aktivierung, wie das zum Beispiel bei Cellulose durch Einsatz von einem alkalisch wässrigen Medium bekannt ist, verzichtet wird.

Durch die aufgezeigte Verfahrenstechnik ist es möglich, Polysaccharide oder deren Derivate vollständig oder nahezu vollständig zu substituieren und unter einfacher Aufbereitung die ionische Flüssigkeit zurückzugewinnen und so erneut in einem weiteren Verfahrenszyklus einsetzen zu können. Durch diese neue Art der Verwendung von ionischen Flüssigkeiten in der Polysaccharid-Chemie wird der Einsatz der toxischen und Umwelt-gefährdenden ionischen Flüssigkeiten minimiert, wodurch auch Derivatisierungen im größeren Maßstab ermöglicht werden. Weiterhin wird durch das erfindungsgemäße Verfahren es ermöglicht, dass insbesondere im Fall der Synthese von kurzkettigen Stärkeestern hohe Reagenzausbeuten erzielt werden, wodurch zielgenaue Substitutionsgrade zugänglich sind. Dadurch wird nicht nur der Einsatz an ionischer Flüssigkeit reduziert, sondern auch eine Verringerung der Menge an Substitutionsreagenzien wie Veretherungsreagenzien, Veresterungsreagenzien oder Silylierungsreagenzien, im Vergleich zu herkömmlichen Syntheseverfahren.

Unter heterogener Prozessführung oder heterogener Reaktionsbedingung wird in der vorliegenden Erfindung die Umsetzung von Polysacchariden und deren Derivaten verstanden, wobei diese nicht vollständig in der ionischen Flüssigkeit gelöst sind. Vorzugsweise sind die Polysaccharide oder dessen Derivate vor oder während der Veresterung, Veretherung oder Silylierung maximal bis zu 50 Gew.-%, d.h. 10 bis 50 Gew.-%, mehr bevorzugt maximal bis zu 40 Gew.-%, d.h. 10 bis 40 Gew.-%, noch mehr bevorzugt maximal bis zu 30 Gew.-%, d.h. 10 bis 30 Gew.-%, bezogen auf das Gesamtgewicht des Ansatzes gelöst.

Entscheidendes Merkmal der vorliegenden Erfindung ist es, dass die ionische Flüssigkeit, im Gegensatz zu bekannten Substituierungsverfahren in der Polysaccharid-Chemie, in besonders geringen Mengen eingesetzt wird. Somit ist es erfindungsgemäß, dass die Menge an ionischer Flüssigkeit 2 bis 25 Gew.-%, bevorzugt 2 bis 20 Gew.-%, insbesondere bevorzugt 2 bis 15 Gew.-%, wie 2 bis 10 Gew.-% bezogen auf das Polysaccharid oder dessen Derivate beträgt.

Besonders gute Ergebnisse können erzielt werden, wenn die ionische Flüssigkeit in einem spezifischen Mol-Verhältnis zu den Anhydro-Glucose-Einheiten (AGE) des Polysaccharids oder dessen Derivate zugegeben wird. Eine Anhydro-Glucose-Einheit gibt die Menge an Hydroxyl-Gruppen pro Glucose-Baustein an. So weist eine Anhydro-Glucose-Einheit von Cellulose drei Hydroxyl-Gruppen auf. Folglich ist es bevorzugt, dass 0,016 bis 1,35 Moläquivalente, mehr bevorzug 0,017 bis 1,30 Moläquivalente, noch mehr bevorzugt 0,020 bis 1,0 Moläquivalente, insbesondere bevorzugt 0,08 bis 0,90 Moläquivalente ionische Flüssigkeit pro Anhydro-Glucose-Einheit des Polysaccharids oder dessen Derivate eingesetzt werden.

Die Reaktionstemperatur liegt bevorzugt oberhalb des Schmelzpunktes der ionischen Flüssigkeit, übersteigt aber nicht mehr wie 200°C. Besonders geeignete Temperaturen liegen zwischen 100 und 150°, insbesondere zwischen 120 und 135°C.

Die Reaktionszeit hängt insbesondere von dem gewünschten Substitutionsgrad ab. Der Substitutionsgrad (DS) gibt die durchschnittliche Anzahl der umgesetzten Hydroxylgruppen in einer Anhydro-Glucose-Einheit an. Folglich, je höher der Substitutionsgrad sein soll, desto länger beträgt die Reaktionszeit. Grundsätzlich ist es erstrebenswert, dass die Reaktionszeit nicht mehr als 24 Stunden beträgt, vorzugsweise jedoch nicht mehr als 4 Stunden. Besonders geeignete Reaktionszeiten liegen zwischen 30 Minuten und 3,5 Stunden.

Die Menge an Veresterungsreagenz, Veretherungsreagenz oder Silylierungsreagenz hängt ebenfalls stark vom gewünschten Substitutionsgrad ab. Auf der anderen Seite zeichnet sich die vorliegende Erfindung insbesondere dadurch aus, dass gegenüber den bekannten Substituierungsverfahren für Polysaccharide eher geringe Mengen an Substituierungsreagenz zu verwenden sind. Folglich beträgt die Menge an verwendetem Veresterungsreagenz, Veretherungsreagenz oder Silylierungsreagenz nicht mehr als 5,5 Moläquivalente pro Anhydro-Glucose-Einheit, noch mehr bevorzugt nicht mehr als 4,5 Moläquivalente pro Anhydro-Glucose-Einheit, insbesondere nicht mehr als 4,0 Moläquivalente pro Anhydro-Glucose-Einheit. In einer besonderen Ausführungsform werden stöchiometrische Mengen an Substituierungsreagenzien in Bezug auf die Anhydro-Glucose-Einheit eingesetzt.

Grundsätzlich ist das vorliegende Verfahren auf alle Polysaccharide und dessen Derivate anwendbar. Es hat sich insbesondere herausgestellt, dass das vorliegende erfindungsgemäße Verfahren besonders geeignet ist zur Veresterung, Veretherung oder Silylierung von Polysacchariden oder dessen Derivate, ausgewählt aus der Gruppe bestehend aus Stärke, Cellulose, Xylan und Chitosan.

Unter ionischen Flüssigkeiten werden insbesondere Salze verstanden, die bei Temperaturen unter 100° flüssig sind. Bevorzugt werden ionische Flüssigkeiten, ausgewählt aus der Gruppe bestehend aus Imidazolium-Verbindungen, PyridiniumVerbindungen, Tetraalkylammonium-Verbindungen sowie deren Gemische verwendet. Besonders bevorzugte ionische Flüssigkeiten der vorliegenden Erfindung sind 1-N-Butyl-3-methylimidazoliumchlorid, 1-N-Allyl-3-methylimidazoliumchorid sowie 1-N-Ethyl-3-methylimidazoliumchlorid. Als außerordentlich vorteilhaft hat sich der Einsatz von 1-N-Butyl-3-methylimidazoliumchlorid herausgestellt.

Bezüglich der zu verwendenden Substituierungsreagenzien sind keine besonderen Einschränkungen notwendig. Allerdings hat sich der Einsatz von Versterungsreagenzien ausgewählt aus der Gruppe bestehend aus C₁ bis C₂₀ Alkylanhydride, wie C₁ bis C₆ Alkylanhydride, und C₂ bis C₂₁ Alkylsäurechloride, wie C₂ bis C₆ Alkylsäurechloride, als besonders günstig herausstellt. Davon haben sich insbesondere Essigsäureanhydrid oder Propionsäureanhydrid bewährt.

Im Fall, dass eine Veretherung durchgeführt werden soll, haben sich insbesondere C₁ bis C₂₀ Alkylepoxide, wie C₁ bis C₆ Alkylepoxide, bewährt. Des Weiteren können die Alkylepoxide weiter funktionalisiert sein. So ist es zum Beispiel bevorzugt, dass die C₃ bis C₈ Alkylepoxide zumindest eine weitere funktionelle Gruppe umfassen, ausgewählt aus der Gruppe bestehend aus Ethergruppe, Allylgruppe, Vinylgruppe und quartäre Stickstoffgruppe. Als besonders geeignet unter diesen hat sich der Allylglycidylether erwiesen.

Auch bezüglich der Silylierung sind alle denkbaren Silylierungsreagenzien einsetzbar. Besonders vorteilhaft jedoch erscheint die Verwendung eines Silylierungsreagenzes der Formel (I) 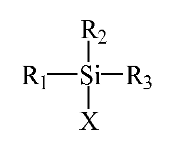 worin R₁, R₂ und R₃ unabhängig voneinander den Rest ausgewählt aus der Gruppe bestehend aus C₁ bis C₁₂ Alkyl, C₂ bis C₁₂ Alkenyl, C₂ bis C₁₂ Alkinyl darstellen, wobei diese Reste ebenfalls funktionelle Gruppen umfassen können, und X ist ausgewählt aus der Gruppe bestehend aus -NH-SiR₄R₅R₆, -N(CH₂CH₃)₂ und -N=C(CH₃)-O-Si(CH₃)₃, wobei R₄, R₅ und R₆ unabhängig voneinander den Rest ausgewählt aus der Gruppe bestehend aus C₁ bis C₁₂ Alkyl, C₂ bis C₁₂ Alkenyl, C₂ bis C₁₂ Akinyl darstellen.

Als ein besonders günstiges Silylierungsmittel hat sich 1,1,1 3,3,3 Hexamethyldisilazan (HMDS) erwiesen.

Das erfindungsgemäße Verfahren kann unter normalen Verfahrensbedingungen, d. h. in einem Reaktorsystem durchgeführt werden. Alternativ kann die Substituierung der Polysaccharide oder dessen Derivate in einem Mikrowellenreaktor durchgeführt werden.

Das erfindungsgemäße Verfahren wird im Weiteren durch die vorliegenden Beispiele genauer beschrieben, ohne darauf beschränkt zu sein.

### BEISPIELE

### Bsp. 1 Synthese von Stärkepropionat - Einsatz von 1.2 moleq BmimCl pro AGE -

Stärke (mind. 15 h bei 105 °C getrocknet) wird zusammen mit 1.2 mol eq 1-N-Butyl-3-methylimidazoliumchlorid und 4.5 moleq Propionsäureanhydrid unter Rühren in einem geeigneten Rundkolben mittels eines Ölbades auf 130 °C erhitzt. Nach Erreichen der Reaktionstemperatur beträgt die Reaktionszeit 4 h. Bei der Verwendung von 1.2 moleq BmimCl pro AGE ist die Reaktionsmischung nach 3 h gelblich transparent. Nach Ablauf der Reaktionszeit wird die Reaktionslösung auf Raumtemperatur abgekühlt und in Ethanol gefällt. Das Produkt wird mehrmals mit Ethanol gewaschen und im Vakuum getrocknet.

Man erhält Stärkepropionat mit einem Substitutionsgrad von 2.9 (bestimmt mittels ¹³C-NMR), welches in Aceton, Essigsäureethylester und Dichlormethan löslich, in Wasser und Ethanol nicht löslich ist.

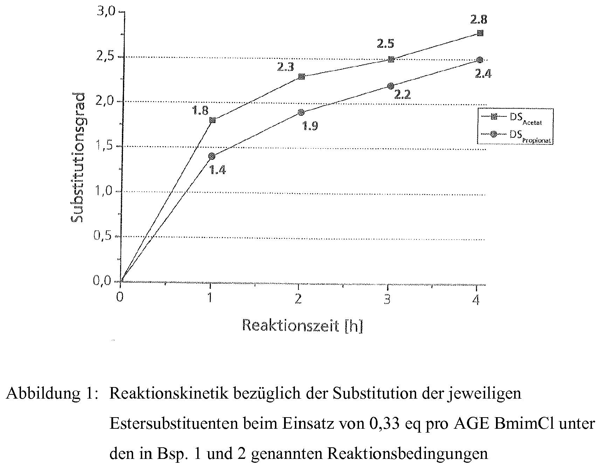

Analog zu der in Bsp. 1 erläuterten Synthese wurden weitere Synthesen zur Herstellung von Stärkepropionaten durchgeführt, bei denen die Konzentration von BmimCl variiert wurde. Die Ergebnisse sind in Tabelle 1, sowie die Reaktionskinetik für den Einsatz von 0,33 moleq BmimCl pro Age als Katalysator in Abbildung 1 dargestellt.

**Tabelle 1: Erzielte Substitutionsgrade für Stärkepropionat bei Änderung der Konzentration an BmimCl unter Synthesebedingungen wie in Bsp. 1 (mit 4.5 moleq Anhydrid) beschrieben. (Verfahren wie Bsp. 1; nur Anteil an BmimCl geändert)**

| **moleq BmimCl pro AGE** | **∑ DS_{Propionat}**** |
|---|---|
| 0.5 | 2.8 |
| 0.33 | 2.2 |
| 0.15 | 1.5 |
| 0.075 | 0.7 |

| | |
|---|---|
| ** Bestimmt mittels Titration nach D. Klemm, B. Philipp, T. Heinze, U. Heinze, W. Wagenknecht: Comprehensive Cellulose Chemistry, Wiley-VCH, Volume 1, 1998, Apendix S. 235 | |

### Bsp. 2 Synthese von Stärkeacetat - Einsatz von 0.33 moleq BmimCl pro AGE -

Stärke (mind. 15 h bei 105 °C getrocknet) wird zusammen mit 0.33 moleq 1-N-Butyl-3-methylimidazoliumchlorid und 4.5 moleq Essigsäureanhydrid unter Rühren in einem geeigneten Reaktor auf 130 °C erhitzt. Nach Erreichen der Reaktionstemperatur beträgt die Reaktionszeit 4 h. Nach Ablauf der Reaktionszeit wird die Reaktionslösung auf Raumtemperatur abgekühlt und in Ethanol gefällt. Das Produkt wird mehrmals mit Ethanol gewaschen und im Vakuum getrocknet.

Man erhält Stärkeacetat mit einem Substitutionsgrad von 2.8, welches in Aceton, Essigsäureethylester und Dichlormethan löslich, in Wasser und Ethanol nicht löslich ist. Die Kinetik der Veresterung ist in Abbildung 1 dargestellt.

Tabelle 2 zeigt die erzielten Substitutionsgrade der Acetatsubstituenten bei Variation der molaren Äquivalente an BmimCl bezogen pro Anhydro-Glucose-Einheit.

**Tabelle 2: Erzielte Substitutionsgrade für Stärkeacetate bei Änderung der Konzentration an BmimCl unter Synthesebedingungen wie in Bsp. 2 (mit 4.5 mol eq Anhydrid) beschrieben.**

| **moleq BmimCl pro AGE** | **∑ DS_{Acetat}**** |
|---|---|
| 0.33 | 2.8 |
| 0.15 | 1.8 |
| 0.075 | 1.5 |

### Bsp. 3 Synthese von Stärkepropionat - Einsatz von lufttrockener Stärke -

Analog zu der in Bsp. 1 beschriebenen Synthesevorschrift wird lufttrockene Stärke (Trockengehalt 88.9 %) mit 4.5 moleq Propionsäureanhydrid pro AGE und 0.33 moleq 1-N-Butyl-3-methylimidazoliumchlorid pro AGE umgesetzt.

Man erhält Stärkepropionat mit einem Substitutionsgrad von 2.0, welches in Aceton, Essigsäureethylester und Dichlormethan löslich, in Wasser und Ethanol nicht löslich ist.

### Bsp. 4 Synthese von Stärkeacetat - Einsatz von 0.075 eq BmimCl pro AGE: 24 h Reaktionszeit -

0.075 moleq 1-N-Butyl-3-methylimidazoliumchlorid und 4.5 moleq Essigsäureanhydrid werden zusammen mit Stärke (mind. 15 h bei 105 °C getrocknet) unter Rühren in einem geeigneten Rundkolben auf 130 °C erhitzt. Nach Erreichen der Reaktionstemperatur beträgt die Reaktionszeit 24 h. Nach Ablauf der Reaktionszeit wird die braune, homogene Reaktionslösung auf Raumtemperatur abgekühlt und in Ethanol gefällt. Das Produkt wird mehrmals mit Ethanol gewaschen und im Vakuum getrocknet.

Man erhält ein Stärkeacetat mit einem Substitutionsgrad von 3.0, welches in Aceton, Essigsäureethylester und Dichlormethan löslich, in Wasser und Ethanol nicht löslich ist.

Entsprechend der in Bsp. 4 beschriebenen Reaktionsführung wurden die molaren Äquivalente an BmimCl weiter verringert und abhängig davon der Substitutionsgrad untersucht. Die Ergebnisse sind in Tabelle 3 zusammengefasst.

**Tabelle 3: Erreichte Substitutionsgrade nach Erhöhung der Reaktionszeit**

| **moleq BmimCL pro AGE** | **∑ DS_{Acetat}**** |
|---|---|
| 0.075 | 3.0 |
| 0.0375 | 2.6 |
| 0.01875 | 0.6 |

### Bsp. 5 Synthese von Stärkeacetat - Änderung der Reaktionstemperatur -

Die Synthese wird analog der Vorschrift für Bsp. 2 durchgeführt, lediglich die Reaktionstemperatur wird auf 85 °C herabgesetzt. Es ergibt sich ein Stärkeacetat mit einem Substitutionsgrad von 0,6.

### Bsp. 6 Synthese von Stärkeacetat durch Veresterung mit Essigsäure

Stärke (mind. 15 h bei 105 °C getrocknet) wird zusammen mit 0.15 moleq 1-N-Butyl-3-Methylimidazoliumchlorid und 6 moleq Essigsäure unter Rühren in einem geeigneten Reaktor auf 130 °C erhitzt. Nach Erreichen der Reaktionstemperatur beträgt die Reaktionszeit 18 h. Nach Ablauf der Reaktionszeit wird die Reaktionslösung auf Raumtemperatur abgekühlt und in Ethanol gefällt. Das Produkt wird mehrmals mit Ethanol gewaschen und im Vakuum getrocknet. Das entstandene Stärkeacetat besitzt einen Substitutionsgrad von 0.5.

### Bsp. 7 Synthese von Stärkeacetat - Variation der Moläquivalente Ac₂O -

Hierzu wird die Synthese durchgeführt, wie in Bsp. 2 beschrieben, und es werden zunächst lediglich die molaren Äquivalente Essigsäureanhydrid pro Anhydro-Glucose-Einheit variiert. Weitere Versuche mit verringerter Menge an Anhydrid und IL haben sich diesen Versuchen angeschlossen. Die eingesetzten Mengen und erzielten Substitutionsgrade sind in Tabelle 4 zusammengefasst.

**Tabelle 4: Erreiche Substitutionsgrade nach Senkung der eingesetzten Menge an Ac₂O**

| **moleq Ac₂O pro AGE** | **moleq BmimCl Pro AGE** | **∑DS_{Acetat}**** | **Homogener Reaktionsansatz** |
|---|---|---|---|
| 4.5 | 0.33 | 2.8 | - |
| 3.25 | 0.33 | 2.8 | + |
| 2.5 | 0.33 | 2.6 | + |
| 2.5 | 0.19 | 2.5 | + |
| 1.5 | 0.19 | 1.7 | + |

### Bsp. 8 Synthese von Stärkeacetat - Variation der Ionischen Flüssigkeit -

Dafür wird Stärke (mind. 15 h bei 105 °C getrocknet) zusammen mit 0.33 moleq pro AGE der jeweiligen Ionischen Flüssigkeit mit 4.5 moleq pro AGE Essigsäureanhydrid, wie in Bsp. 2 beschrieben, umgesetzt.

Die Resultate sind in Tabelle 5 enthalten.

**Tabelle 5: Erzielte Substitutionsgrade für Stärkeacetate unter Verwendung verschiedener Ionischer Flüssigkeiten**

| **Ionische Flüssigkeit** | **∑DS_{Acetat}**** |
|---|---|
| BmimCl | 2.8 |
| TBACl | 0.8 |

### Bsp. 9 Synthese von Stärkeacetaten im Mikrowellenreaktor

In einem Mikrowellenreaktor wird Stärke (mind. 15 h bei 105 °C getrocknet) mit Essigsäureanhydrid und BmimCl zu Stärkeacetat umgesetzt. Dabei wird jeweils innerhalb von 10 min auf 130 °C Innentemperatur erhitzt und innerhalb von 30 min auf Raumtemperatur abgekühlt. Genauere Reaktionsbedingungen und -ergebnisse sind in Tabelle 6 aufgeführt.

**Tabelle 6: Erzielte Substitutionsgrade unter Verwendung einer Mikrowelle Temperierungseinheit**

| **moleq Ac₂O pro AGE** | **moleq BmimCl pro AGE** | **t_{Reaktion}[h]** | **∑DS**_{**A**cetat}** |
|---|---|---|---|
| 4.0 | 0.056 | 4 | 1.1 |
| 3,25 | 0.0375 | 2 | 0.4 |

### Bsp. 10 Synthese von Allyl-2-hydroxypropylstärke

0.1 moleq BmimCl pro AGE sowie 7 moleq Allylglycidylether pro AGE werden zusammen mit Stärke (mind. 15 h bei 105 °C getrocknet) unter Rühren in einem geeigneten Rundkolben auf 100 °C erhitzt. Nach Erreichen der Reaktionstemperatur beträgt die Reaktionszeit 4 h. Nach Ablauf der Reaktionszeit wird der Reaktionsansatz auf Raumtemperatur abgekühlt und in Ethanol gefällt. Das Produkt wird mehrmals mit Ethanol gewaschen und im Vakuum getrocknet. Man erhält Allyl-2-hydroxypropylstärke mit einem Substitutionsgrad von 0,2.

### Bsp. 11 Synthese von Celluloseacetaten

Für die Veresterungsreaktion von Cellulose zu Celluloseacetaten werden verschiedenste Reaktionsbedingungen getestet. Eine Reaktionsführung beinhaltet die Umsetzung von mikrokristalliner Cellulose (DP_{Cuen} = 260; getrocknet bei 105 °C, > 15 h) mit 1.2 moleq BmimCl und 8.7 moleq Essigsäureanhydrid pro AGE in einem geeigneten Reaktor für 2 h bei einer Temperatur von 130 °C. Anschließend wird der auf Raumtemperatur gekühlte Reaktionsansatz in Ethanol gefällt und neutral gewaschen. Es ergibt sich ein Substitutionsgrad an Acetatgruppen von 1.2.

Tabelle 7 zeigt weitere Reaktionsbedingungen und erzielte Substitutionsgrade verschiedener Ansätze zur Herstellung von Celluloseacetat.

**Tabelle 7: Reaktionsbedingungen und erzielte Substitutionsgrade für die Darstellung von Celluloseacetaten.**

| **moleq BmimCl/ AGE** | **moleq Ac₂O/ AGE** | **T [°C]** | **t [h]** | **∑DS_{Acetat}**** |
|---|---|---|---|---|
| 0,8 | 5.8 | 130 | 6 | 1.6 |
| 0.15 | 4.5 | 130 | 24 | 1.2 |
| 0.15 | 9.0 | 130 | 24 | 1.1 |

### Bsp. 12 Synthese von Methylcelluloseacetat

Methylcellulose (Methocel^{®}, Methoxygehalt 27.5 % - 32 %) wird zusammen mit 10.6 moleq Essigsäureanhydrid in einen geeigneten Reaktor gegeben und mit 0.1 moleq pro Anhydro-Glucose-Einheit BmimCl versetzt. Der Reaktionsansatz wird auf 130 °C erwärmt und die Reaktion für 4 h bei dieser Temperatur fortgesetzt. Nach Abkühlen auf Raumtemperatur wird das Produkt im wässrigen Medium gefällt und neutral gewaschen. Es eribt sich Methylcelluloseacetat mit einem DS_{Acetat} = 0.6, welches nicht in Wasser oder Aceton löslich ist, jedoch in DMSO.

### Bsp. 13 Synthese von Trimethylsilylcellulose

Trimethylsilylcellulose wird durch die Umsetzung von mikrokristalliner Cellulose (DP_{Cuen} = 260; getrocknet bei 105 °C, >15 h) mit 1,1,1,3,3,3-Hexamethyldisilazan (HMDS) unter der Verwendung von BmimCl als Katalysator bei 125 °C in einem Rundkolben erhalten. Der Reaktionsansatz wurde anschließend in Ethanol gefällt und aufgearbeitet.

Genauere Versuchsbedingungen und -ergebnisse sind in Tabelle 8 aufgeführt.

**Tabelle 8: Reaktionsbedingungen und erzielte Substitutionsgrade für die Darstellung von Trimethylsilylcellulosen**

| **moleq BmimCl/ AGE** | **moleq HMDS/ AGE** | **t[h]** | **∑DS_{TMS}***** |
|---|---|---|---|
| 0.33 | 4.6 | 18 | 0.8 |
| 0.1 | 5.6 | 18 | 0.8 |
| 0.28 | 5.6 | 6.5 | 0.9 |

| | | | |
|---|---|---|---|
| *** Bestimmt mittels Festkörper ¹³C-NMR | | | |

Alle in gezeigten Trimethylsilylcellulosen sind in Dichlormethan löslich.

### Bsp. 14 Synthese von Chitosanpropionat

Chitosan (Deacetylierungsgrad: 90 %; 15 h bei 105 °C getrocknet) und 7.5 moleq Propionsäureanhydrid pro AGE werden zusammen mit 0.5 moleq 1-N-Butyl-3-methylimidazoliumchlorid pro AGE in einen geeigneten Reaktor gegeben und auf 130 °C erwärmt. Anschließend werden 15 min nach Erreichen der Reaktionstemperatur weitere 3.3 moleq Propionsäureanhydrid pro AGE der Reaktionsmischung beigefügt. Die Reaktionszeit beträgt 24 h. Nach Ablauf der Reaktionszeit wird die braune Reaktionsmischung auf Raumtemperatur abgekühlt und in Ethanol gegeben. Das Produkt wird mehrmals mit Ethanol gewaschen und im Vakuum getrocknet. Es ergibt sich ein gelbliches Produkt mit einem DS_{Propionat} = 1,5***.

### Bsp. 15 Synthese von Xylanestern

Xylan (15 h bei 105 °C getrocknet) wird mit 0.33 moleq BmimCl pro AGE mit dem entsprechenden Anhydrid für 4 h bei 130 °C umgesetzt. Tabelle 9 zeigt die erzielten Sustitutionsgrade und Reagenzausbeuten.

**Tabelle 9: Synthesebedingungen und -ergebnisse der Xylanveresterung**

| **Anhydrid** | **moleq Anhydrid pro AGE** | **∑D_{Ester}***** | **Reagenzaus beute [%]** |
|---|---|---|---|
| Essigsäureanhydrid | 7.0 | 1.7 | 25 |
| Propionsäureanhydrid | 6.0 | 1.1 | 18 |

## Patentansprüche

1. Verfahren zur Veresterung, Veretherung oder Silylierung von Polysaccharid oder dessen Derivate mittels eines Veresterungsreagenz, Veretherungsreagenz oder Silylierungsreagenz in Gegenwart einer ionischen Flüssigkeit, worin
(a) das Verfahren unter heterogenen Reaktionsbedingungen durchgeführt wird,
und
(b) die Menge an ionischer Flüssigkeit 2 bis 25 Gew.-% bezogen auf das Polysaccharid oder dessen Derivate beträgt,
wobei unter ionischen Flüssigkeiten Salze verstanden werden, die bei Temperaturen unter 100°C flüssig sind.

2. Verfahren nach Anspruch 1, worin die 0,017 bis 1,3 Moläquivalente ionische Flüssigkeit pro Anhydro-Glucose-Einheit (AGE) des Polysaccharids oder dessen Derivate eingesetzt werden.

3. Verfahren nach irgendeinem der vorhergehenden Ansprüche, worin das Polysaccharid oder dessen Derivate weder vor noch während der Veresterung, Veretherung oder Silylierung vollständig in Lösung ist.

4. Verfahren nach irgendeinem der vorhergehenden Ansprüche, worin das Polysaccharid oder dessen Derivate vor oder während der Veresterung, Veretherung oder Silylierung maximal bis zu 50 Gew.-% bezogen auf das Gesamtgewicht des Ansatzes gelöst ist.

5. Verfahren nach irgendeinem der vorhergehenden Ansprüche, worin die Reaktionstemperatur oberhalb des Schmelzpunktes der ionische Flüssigkeit ist, aber nicht mehr wie 200 °C beträgt.

6. Verfahren nach irgendeinem der vorhergehenden Ansprüche, worin die Reaktionszeit nicht mehr als 24 h beträgt.

7. Verfahren nach irgendeinem der vorhergehenden Ansprüche, worin das Polysaccharid oder dessen Derivate ausgewählt ist aus der Gruppe bestehend aus Stärke, Cellulose, Xylan und Chitosan.

8. Verfahren nach irgendeinem der vorhergehenden Ansprüche, worin die ionische Flüssigkeit ausgewählt ist aus der Gruppe bestehend aus Imidazoliumverbindungen, Pyridiniumverbindungen, Tetraalkylammoniumverbindungen und Gemische davon.

9. Verfahren nach irgendeinem der vorhergehenden Ansprüche, worin das Veresterungsreagenz ausgewählt ist aus der Gruppe bestehend aus C₁ bis C₂₀ Alkylanhydride und C₂ bis C₂₁ Alkylsäurechloride.

10. Verfahren nach irgendeinem der vorhergehenden Ansprüche, worin das Veretherungsreagenz ein C₃ bis C₈ Alkylepoxid ist.

11. Verfahren nach irgendeinem der vorhergehenden Ansprüche, worin das Veretherungsreagenz ein C₃ bis C₈ Alkylepoxid ist und dieses Alkylepoxid neben der Epoxide zumindest eine weitere funktionelle Gruppe umfasst ausgewählt aus der Gruppe bestehend aus Ether-Gruppe, Allyl-Gruppe, Vinyl-Gruppe und quartäre Stickstoff-Gruppe.

12. Verfahren nach irgendeinem der vorhergehenden Ansprüche, worin das Silylierungsreagenz die Formel (I) 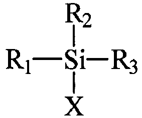 hat,
worin
R₁, R₂ und R₃ unabhängig voneinander den Rest ausgewählt aus der Gruppe bestehend aus C₁ bis C₁₂ Alkyl, C₂ bis C₁₂ Alkenyl, C₂ bis C₁₂ Akinyl darstellen, und
X ist ausgewählt aus der Gruppe bestehend aus -NH-SiR₄R₅R₆, -N(CH₂CH₃)₂ und -N=C(CH₃)-O-Si(CH₃)₃, wobei R₄, R₅ und R₆ unabhängig voneinander den Rest ausgewählt aus der Gruppe bestehend aus C₁ bis C₁₂ Alkyl, C₂ bis C₁₂ Alkenyl, C₂ bis C₁₂ Akinyl darstellt.

13. Verfahren nach irgendeinem der vorhergehenden Ansprüche, worin das Verfahren in einem Mikrowellenreaktor durchgeführt wird.

## Claims

1. Process for esterifying, etherifying or silylating polysaccharide or derivatives thereof by means of an esterifying reagent, etherifying reagent or silylating reagent in the presence of an ionic liquid, in which
(a) the process is carried out under heterogeneous reaction conditions,
and
(b) the amount of ionic liquid is 2% to 25% by weight, based on the polysaccharide or derivatives thereof,
ionic liquids being understood as meaning salts which are liquid at temperatures below 100°C.

2. Process according to Claim 1, in which 0.017 to 1.3 mole equivalents of ionic liquid are used per anhydroglucose unit (AGU) of the polysaccharide or derivatives thereof.

3. Process according to either of the preceding claims, in which the polysaccharide or derivatives thereof is or are completely in solution neither before nor during the esterification, etherification or silylation.

4. Process according to any of the preceding claims, in which the polysaccharide or derivatives thereof is or are in solution to an extent of not more than up to 50% by weight, based on the total weight of the batch, before or during the esterification, etherification or silylation.

5. Process according to any of the preceding claims, in which the reaction temperature is above the melting point of the ionic liquid, but not more than 200°C.

6. Process according to any of the preceding claims, in which the reaction time is not more than 24 hours.

7. Process according to any of the preceding claims, in which the polysaccharide or derivatives thereof is or are selected from the group consisting of starch, cellulose, xylan and chitosan.

8. Process according to any of the preceding claims, in which the ionic liquid is selected from the group consisting of imidazolium compounds, pyridinium compounds, tetraalkylammonium compounds and mixtures thereof.

9. Process according to any of the preceding claims, in which the esterifying reagent is selected from the group consisting of C₁ to C₂₀ alkyl anhydrides and C₂ to C₂₁ alkanoyl chlorides.

10. Process according to any of the preceding claims, in which the etherifying reagent is a C₃ to C₈ alkyl epoxide.

11. Process according to any of the preceding claims, in which the etherifying reagent is a C₃ to C₈ alkyl epoxide and this alkyl epoxide besides the epoxides comprises at least one further functional group selected from the group consisting of ether group, allyl group, vinyl group and quaternary nitrogen group.

12. Process according to any of the preceding claims, in which the silylating reagent has the formula (I) 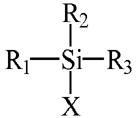 in which
R₁, R₂ and R₃ independently of one another represent the radical selected from the group consisting of C₁ to C₁₂ alkyl, C₂ to C₁₂ alkenyl and C₂ to C₁₂ alkynyl, and
X is selected from the group consisting of -NH-SiR₄R₅R₆, -N(CH₂CH₃)₂ and -N=C(CH₃)-O-Si(CH₃)₃, where R₄, R₅ and R₆ independently of one another represent the radical selected from the group consisting of C₁ to C₁₂ alkyl, C₂ to C₁₂ alkenyl and C₂ to C₁₂ alkynyl.

13. Process according to any of the preceding claims, in which the process is carried out in a microwave reactor.

## Revendications

1. Procédé d'estérification, d'éthérification ou de silylation d'un polysaccharide ou ses dérivés au moyen d'un réactif d'estérification, d'un réactif d'éthérification ou d'un réactif de silylation en présence d'un liquide ionique, dans lequel
(a) le procédé est réalisé dans des conditions de réaction hétérogènes,
et
(b) la quantité de liquide ionique est de 2 à 25 % en poids par rapport au polysaccharide ou ses dérivés,
les liquides ioniques se rapportant à des sels qui sont liquides à des températures inférieures à 100 °C.

2. Procédé selon la revendication 1, dans lequel 0,017 à 1,3 équivalent molaire de liquide ionique est utilisé par unité anhydro-glucose (AGE) du polysaccharide ou ses dérivés.

3. Procédé selon l'une quelconque des revendications précédentes, dans lequel le polysaccharide ou ses dérivés ne sont entièrement en solution ni avant ni pendant l'estérification, l'éthérification ou la silylation.

4. Procédé selon l'une quelconque des revendications précédentes, dans lequel le polysaccharide ou ses dérivés sont dissous au plus jusqu'à 50 % en poids, par rapport au poids total de la préparation, avant ou pendant l'estérification, l'éthérification ou la silylation.

5. Procédé selon l'une quelconque des revendications précédentes, dans lequel la température de réaction est supérieure au point de fusion du liquide ionique, mais n'est pas supérieure à 200 °C.

6. Procédé selon l'une quelconque des revendications précédentes, dans lequel la durée de réaction n'est pas supérieure à 24 h.

7. Procédé selon l'une quelconque des revendications précédentes, dans lequel le polysaccharide ou ses dérivés sont choisis dans le groupe constitué par l'amidon, la cellulose, le xylane et le chitosan.

8. Procédé selon l'une quelconque des revendications précédentes, dans lequel le liquide ionique est choisi dans le groupe constitué par les composés d'imidazolium, les composés de pyridinium, les composés de tétraalkylammonium et leurs mélanges.

9. Procédé selon l'une quelconque des revendications précédentes, dans lequel le réactif d'estérification est choisi dans le groupe constitué par les anhydrides d'alkyle en C₁ à C₂₀ et les chlorures d'acides alkyliques en C₂ à C₂₁.

10. Procédé selon l'une quelconque des revendications précédentes, dans lequel le réactif d'éthérification est un époxyde d'alkyle en C₃ à C₈.

11. Procédé selon l'une quelconque des revendications précédentes, dans lequel le réactif d'éthérification est un époxyde d'alkyle en C₃ à C₈ et cet époxyde d'alkyle comprend en plus des époxydes au moins un groupe fonctionnel supplémentaire choisi dans le groupe constitué par un groupe éther, un groupe allyle, un groupe vinyle et un groupe azote quaternaire.

12. Procédé selon l'une quelconque des revendications précédentes, dans lequel le réactif de silylation a la formule (I) 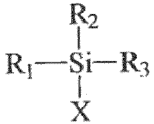 dans laquelle
R₁, R₂ et R₃ représentent indépendamment les uns des autres un radical choisi dans le groupe constitué par alkyle en C₁ à C₁₂, alcényle en C₂ à C₁₂, alcynyle en C₂ à C₁₂, et
X est choisi dans le groupe constitué par -NH-SiR₄R₅R₆,-N(CH₂CH₃)₂ et -N=C(CH₃)-O-Si(CH₃)₃, R₄, R₅ et R₆ représentant indépendamment les uns des autres un radical choisi dans le groupe constitué par alkyle en C₁ à C₁₂, alcényle en C₂ à C₁₂, alcynyle en C₂ à C₁₂.

13. Procédé selon l'une quelconque des revendications précédentes, dans lequel le procédé est réalisé dans un réacteur à micro-ondes.
